# EUROPÄISCHE PATENTSCHRIFT

(11) **EP 2 598 271 B1**
(45) Veröffentlichungstag und Bekanntmachung des Hinweises auf die Patenterteilung: **27.09.2017**
(21) Anmeldenummer: 11736096.6
(22) Anmeldetag: 25.07.2011
(51) Int. Cl.: B23B 31/30, B23B 31/00, B23B 31/117, B23B 31/107

(54) **HYDRODEHNSPANNFUTTER**
HYDRAULIC EXPANSION CHUCK
MANDRIN EXPANSIBLE HYDRAULIQUEMENT

(30) Priorität: 26.07.2010 DE 102010032284
(43) Veröffentlichungstag der Anmeldung: 05.06.2013
(73) Patentinhaber: Pfister, Rainer, 72393 Burladingen (DE)
(72) Erfinder: Pfister, Rainer, 72393 Burladingen (DE)
(74) Vertreter: Mammel und Maser
(86) Internationale Anmeldenummer: PCT/EP2011/062731
(87) Internationale Veröffentlichungsnummer: WO 2012/013629

(56) Entgegenhaltungen:
- EP-A1- 0 013 646
- EP-A1- 0 275 441
- DE-A1-102006 028 408
- DE-B3-102009 053 142
- DE-U1- 9 002 248
- US-A- 3 762 731
- US-A1- 2005 238 451

## Beschreibung

Die Erfindung betrifft ein Hydrodehnspannfutter mit einer formschlüssigen Drehmomentmitnahme eines im Hydrodehnspannfutter eingespannten Werkzeugs, gemäß dem Oberbegriff des Anspruchs 1.

Ein derartiges Hydrodehnspannfutter ist aus der DE 9002248 U1 bekannt. Die DE 9002248 U1 zeigt und beschreibt ein Hydrodehnspannfutter, bei dem ein in einer Dehnbuchse aufgenommenes Werkzeug zusätzlich zu der hydraulischen Einspannung durch einen in einem Grundkörper radial verstellbar angeordneten Sicherungsbolzen mechanisch arretierbar ist. Zur Arretierung ist der im Grundkörper angeordnete Sicherungsbolzen über einen in der Dehnbuchse vorgesehenen radialen Durchbruch in formschlüssigem Eingriff mit einer am Werkzeugschaft vorgesehenen Mitnahmefläche bringbar. Ein in der Dehnbuchse aufgenommenes Werkzeug lässt sich daher über die Dehnbuchse kraftschlüssig und über den Sicherungsbolzen zusätzlich formschlüssig arretieren. Der Sicherungsbolzen ist allerdings über einen im Grundkörper geführten zweiteiligen, federkraftbeaufschlagten Schieber in der Weise mit dem im Grundkörper angeordneten, die Dehnbuchse mit einem hydraulischen Druck beaufschlagenden Spannsatz verbunden, dass der Sicherungsbolzen nur in Abhängigkeit von einer Spann- oder Lösebetätigung einer Spannschraube in bzw. außer Eingriff mit der Mitnahmefläche am Werkzeugschaft bringbar ist. Diese funktionale Kopplung des Sicherungsbolzens mit der Spannschraube des Spannsatzes mag zwar die Handhabung des Hydrodehnspannfutters insofern vereinfachen, als zum Einspannen oder Lösen des Werkzeugs nur die Spannschraube zu betätigen ist, sie resultiert aber in einem technisch aufwändigeren Aufbau des Hydrodehnspannfutters insgesamt sowie in einer erhöhten Störungsanfälligkeit und höheren Herstellungskosten.

Hiervon ausgehend liegt der Erfindung die Aufgabe zugrunde, ein Hydrodehnspannfutter bereitzustellen, das trotz einer vereinfachten, kompakten Bauweise eine zuverlässige Drehmomentmitnahme eines eingespannten Werkzeugs gestattet.

Diese Aufgabe wird durch ein Hydrodehnspannfutter mit den Merkmalen des Anspruchs 1 gelöst. Das erfindungsgemäße Hydrodehnspannfutter ist gebildet aus einem Grundkörper und einer unter Ausbildung wenigstens einer Druckkammer im Grundkörper eingesetzten Dehnbuchse zum kraftschlüssigen Einspannen eines Werkzeugs. Die Dehnbuchse weist einen radialen Durchbruch auf, der in Flucht mit einem im Grundkörper verstellbar gehaltenen Mitnehmer angeordnet ist, der über den Durchbruch in formschlüssigem Eingriff mit einer Mitnahmefläche am Werkzeugschaft des in der Dehnbuchse aufzunehmenden Werkzeugs bring- bar ist. Das erfindungsgemäße Hydrodehnspannfutter zeichnet sich durch einen Mitnehmer mit einer von radial außerhalb des Hydrodehnspannfutters antreibbaren Mitnehmerschraube aus, die in einer im Grundkörper in Flucht mit dem radialen Durchbruch in der Dehnbuchse ausgebildeten Gewindebohrung eingeschraubt ist.

Im Unterschied zu dem eingangs diskutierten Stand der Technik gemäß der DE 9002248 U1 kann bei dem erfindungsgemäßen Hydrodehnspannfutter der Mitnehmer daher von einem im Grundkörper vorgesehenen Spannsatz zur hydraulischen Druckbeaufschlagung der Hydrodehnkammer funktional entkoppelt und räumlich getrennt angeordnet sein. Der genannte Spannsatz umfasst üblicherweise eine Spannschraube, die über einen Spannkolben ein der Druckkammer zwischen der Dehnbuchse und dem Grundkörper zugeführtes Druckfluid unter Druck setzt. Erfindungsgemäß kann die Mitnehmerschraube nun jederzeit und ohne Rücksicht auf den Betätigungszustand des Spannsatzes bzw. den Spannzustand der Dehnbuchse angetrieben werden. Durch die funktionale und bauliche Entkopplung des Mitnehmers vom Spannsatz vereinfacht sich der Aufbau des Hydrodehnspannfutters erheblich, was zu einem kompakten Aufbau führt sowie dazu beiträgt, die Herstellungskosten gering zu halten. Gleichwohl kann über den formschlüssigen Eingriff des Mitnehmers mit der Mitnahmefläche am Werkzeugschaft ein in der Dehnbuchse aufgenommenes Werkzeug axial und zur Drehmomentübertragung im Grundkörper arretiert werden. Bei entsprechend enger Tolerierung des radialen Durchbruchs der Dehnbuchse lässt sich über den Mitnehmer zugleich die Dehnbuchse sowohl axial als auch in Drehrichtung um die Längsmittelachse des Hydrodehnspannfutters arretieren.

Die Dehnbuchse ist bevorzugt im Sinne einer Abdichtung der wenigstens einen Druckkammer im Grundkörper des Hydrodehnspannfutter grundsätzlich fest angeordnet. Eine feste Anordnung wird insbesondere durch Einpressen, Einlöten und/oder Einschweißen der Dehnbuchse erreicht. In diesem Fall sind weitere Dichtmaßnahmen, wie 0-Ring-Dichtung nicht notwendig. Durch den mit dem Werkzeug in einen formschlüssigen Eingriff bringbaren Mitnehmer wird daher eine zusätzliche Einspann- und Lagerstelle geschaffen. Denn ein im Spannfutter aufgenommenes Werkzeug erfährt neben der hydraulischen Spannkraft durch die Dehnbuchse, die in axialer Richtung betrachtet an einer oder mehreren Stellen in das Werkzeug eingeleitet werden kann, an einer zusätzlichen Stelle eine mechanische Spannkraft. Somit kann die Zahl der das Werkzeug im Hydrodehnspannfutter fixierenden Spann- bzw. Lagerstellen erhöht werden, was in einer erhöhten Spannkraft, Rundlaufgenauigkeit und Steifigkeit des Hydrodehnspannfutters insgesamt resultiert. Das erfindungsgemäß kompakt aufgebaute Hydrodehnspannfutter ist daher für die Bearbeitung schwer zerspanbarer Werkstoffe geeignet, wo es auf die Übertragung höchster Drehmomente ankommt.

Des Weiteren wird durch das erfindungsgemäße Hydrodehnspannfutter eine einfache und anwenderfreundliche Handhabung ermöglicht. Nach dem Einsetzen des Werkzeugschaftes in das Hydrodehnspannfutter wird die Mitnehmerschraube eingeschraubt, so dass diese leicht an einer Mitnahmefläche am Werkzeugschaft anliegt. Dies dient zur Orientierung und Ausrichtung der Mitnahmefläche des Werkzeugschaftes zur Mitnehmerschraube. Anschließend erfolgt ein Spannen des Werkzeugschaftes über die Dehnbuchse. Darauf erfolgt ein radiales Spannen des Werkzeugschaftes über die Mitnehmerschraube, welche an der Mitnahmefläche des Werkzeugschaftes in gespanntem Zustand angreift, welchem insbesondere ein Entspannen nach DIN 1835 entspricht. Durch die funktionale Entkopplung der axialen und radialen aufzubringenden Spannkraft ist insbesondere die anwenderfreundliche Handhabung ermöglicht.

Vorteilhafte oder bevorzugte Weiterbildungen des erfindungsgemäßen Hydrodehnspannfutters sind Gegenstand abhängiger Ansprüche.

Was die Gestaltung des Mitnehmers und der Mitnahmefläche am Werkzeugschaft betrifft, so kann auf z.T. bekannte oder genormte Gestaltungen zurückgegriffen werden.

Die Mitnahmefläche am Werkzeugschaft kann beispielsweise als eine achsparallele Fläche gemäß DIN 1835 B oder als eine unter einem vorgegebenen Winkel zur Längsmittelachse des Werkzeugs geneigte Fläche gemäß DIN 1835 E ausgebildet sein.

Weiter kann der Antrieb des Mitnehmers radial, d.h. rechtwinklig zur Längsmittelachse des Hydrodehnspannfutters bzw. Werkzeugs, oder in einem vorgegebenen Winkel kleiner 90° zur Längsmittelachse erfolgen. Abhängig von der Ausrichtung der Achse der Mitnehmerschraube und der Ausrichtung der Mitnahmefläche am Werkzeugschaft kann die Mitnehmerschraube unmittelbar oder mittelbar auf die Mitnahmefläche wirken. So kann die Mitnehmerschraube eine fest daran angeordnete stirnseitige Druckfläche aufweisen, die für eine unmittelbare flächige Anlage an der Mitnahmefläche am Werkzeugschaft ausgebildet ist. In diesem Fall reduziert sich der Mitnehmer auf die Mitnehmerschraube, die in formschlüssigem Eingriff mit der Mitnahmefläche am Werkzeugschaft gebracht werden kann. Diese Mitnehmerschraube ist beispielsweise als Gewindestift ausgebildet.

Alternativ dazu kann die Mitnehmerschraube stirnseitig mit einem Druckübertragungsstück verbunden sein, das eine Druckfläche aufweist, die für eine flächige Anlage an der Mitnahmefläche am Werkzeugschaft ausgebildet ist. In diesem Fall wirkt die Mitnehmerschraube mittelbar über das stirnseitig angeordnete Druckübertragungsstück auf die Mitnahmefläche am Werkzeugschaft. Das Druckübertragungsstück ist schwenkbar oder verdrehbar zur Mitnehmerschraube aufgenommen, jedoch druckstabil, so dass eine radiale Spannkraft von der Mitnehmerschraube unmittelbar auf das Druckübertragungsstück auf die Mitnahmefläche übertragen wird. Hierfür ist das Druckübertragungsstück bevorzugt als Kugel mit einer Druckfläche ausgebildet, welche drucksteif in der Mitnehmerschraube geführt ist. Dadurch kann eine einfache Ausgestaltung eines Mitnehmers ermöglicht sein, der aus der Mitnehmerschraube und dem Druckübertragungsstück gebildet wird

In beiden diskutierten Fällen bereitet die Gestaltung des Mitnehmers keinerlei Schwierigkeiten. Gleichwohl wird bei einer einfachen Bedienung eine zuverlässige axiale und drehsichere Festlegung des in der Dehnbuchse aufgenommenen Werkzeugs ermöglicht.

Für den Fall, dass der Mitnehmer aus der Mitnehmerschraube und dem Druckübertragungsstück gebildet ist, kann das Druckübertragungsstück vorteilhaft in der Art eines Kugelgelenks mit der Mitnehmerschraube verbunden sein. Diese Gestaltung ermöglicht durch die Verdrehbarkeit des Druckübertragungsstücks relativ zur Mitnehmerschraube eine optimale Ausrichtung der am Druckübertragungsstück ausgebildeten Druckfläche nach der am Werkzeugschaft ausgebildeten Mitnahmefläche. Dies ist insbesondere für den Fall von Vorteil, wenn die Mitnahmefläche eine unter einem vorgegebenen Winkel zur Längsmittelachse des Werkzeugs geneigte Fläche gemäß DIN 1835 E ausgebildete Fläche ist.

Im Sinne der Erzielung einer hohen Werkzeugrundlaufgenauigkeit definiert in einer bevorzugten Weiterbildung die Dehnbuchse mit dem Grundkörper wenigstens zwei axial beabstandete ringförmige Druckkammern und liegt der radiale Durchbruch im Bereich des axialen Abstands zwischen den beiden Druckkammern. Über die wenigstens zwei axial beabstandeten Druckkammern wird erreicht, dass ein in der Dehnbuchse aufgenommener Werkzeugschaft in axialer Richtung beabstandet an wenigstens zwei Stellen gespannt wird, wodurch sich einer spannungs- oder fliehkraftbedingten Lageabweichung zwischen der Längsmittelachse des Werkzeugs und der Längsmittelache des Hydrodehnspannfutters entgegenwirken lässt. Mit der weiteren Spannstelle, die über den Mitnehmer erhalten wird, erhöht sich die Zahl der Spann- bzw. Lagerstellen damit auf wenigstens drei, was zu den oben genannten Effekten einer höheren Rundlaufgenauigkeit und Steifigkeit führt. Die Verlegung des radialen Durchbruchs in den Bereich des axialen Abstands zwischen den beiden Druckkammern ermöglicht eine problemlos zu beherrschende Abdichtung der beiden Druckkammern gegenüber dem radialen Durchbruch.

Alternativ dazu kann die Dehnbuchse mit dem Grundkörper aber auch nur eine ringförmige Druckkammer definieren, die mit Ausnahme eines inselförmigen Bereichs durchgängig ist, wobei der radiale Durchbruch im Bereich der Insel liegt. Durch eine Anordnung des radialen Durchbruchs innerhalb des inselförmigen Bereichs lässt sich auch bei der alternativen Weiterbildung des erfindungsgemäßen Hydrodehnspannfutters eine zuverlässige Abdichtung der Druckkammer gegenüber dem radialen Durchbruch erreichen.

Zur Ausbildung der wenigstens einen Druckkammer weist vorzugsweise die Dehnbuchse eine mit Ringnuten versehene Außenumfangsfläche und der Grundkörper eine zylindrisch bearbeitete Innenumfangsfläche auf. Die Außenumfangsfläche der Dehnbuchse lässt sich infolge eines problemlosen Zugangs leichter bearbeiten als die oftmals eng bemessene Innenumfangsfläche des Grundkörpers. Daher ist bei dem erfindungsgemäßen Hydrodehnspannfutter vorzugsweise die Innenumfangsfläche des Grundköpers zylindrisch ausgebildet, während die Außenumfangsfläche der Dehnbuchse der Struktur der wenigstens einen Druckkammer entsprechend mit Ringnuten oder - allgemein ausgedrückt - mit einer entsprechenden Oberflächenstruktur versehen ist. Außerdem wird durch die Ausbildung der Druckkammer am Außenumfang der Dehnbuchse erreicht, dass die Dehnbuchse in den Bereichen, in denen die die Druckkammern bildenden Ringnuten vorgesehen sind, relativ dünnwandig und in den dazwischen liegenden Bereichen relativ dickwandig ausgeführt sein kann. Bei einer Druckbeaufschlagung der Druckkammern erfährt die Dehnbuchse daher in den dickwandigen Bereichen im Vergleich zu dem dünnwandigeren Bereich keine Verformung, so dass erfindungsgemäß der radiale Durchbruch in die dickwandigeren Bereiche, d.h. insbesondere in den Bereich zwischen zwei Druckkammern, gelegt werden kann. Durch eine feste Anordnung der Dehnbuchse im Grundkörper des Hydrodehnspannfutters, was durch Einpressen, Einlöten oder Einschweißen der Dehnbuchse erreicht wird, kann so eine zuverlässige Abdichtung der Druckkammern gegenüber dem radialen Durchbruch gewährleistet werden.

Die Druckeinspeisung in die wenigstens eine Druckkammer zwischen der Dehnbuchse und dem Grundkörper erfolgt vorzugsweise durch einen im Grundkörper oder der Dehnbuchse ausgebildeten Druckeinspeisungshauptkanal. Im Fall der vorstehend diskutierten Weiterbildung, bei der zur Ausbildung der wenigstens einen Druckkammer die Dehnbuchse außenumfangsseitig mit Ringnuten versehen ist, kann es aus Gründen der Abdichtung aber zweckmäßig sein, den zu der wenigstens einen Druckkammer führenden Druckeinspeisungskanal in den Grundkörper zu verlegen.

Im Folgenden wird ein bevorzugtes Ausführungsbeispiel des erfindungsgemäßen Hydrodehnspannfutters anhand der beigefügten Zeichnungen erläutert. In den Zeichnungen zeigt:
Fig. 1 eine axiale Draufsicht auf das erfindungsgemäße Hydrodehnspannfutter,
Fig. 2 eine Seitenansicht des erfindungsgemäßen Hydrodehnspannfutters,
Fig. 3 einen Längsschnitt durch das erfindungsgemäße Hydrodehnspannfutter in auseinander gezogener Darstellung,
Fig. 4 einen Längsschnitt durch das erfindungsgemäße Hydrodehnspannfutter,
Fig. 5a, 5b zwei beispielhafte Mitnehmersysteme,
Fig. 6a, 6b, 6c eine Seitenansicht, eine Draufsicht und einen Längsschnitt einer Dehnbuchse,
Fig. 7a, 7b, 7c eine Seitenansicht, eine Draufsicht und einen Längsschnitt einer alternativen Dehnbuchse.

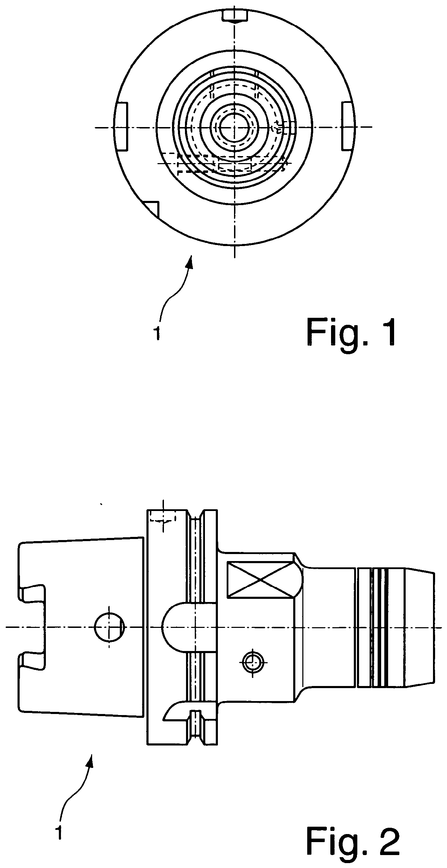

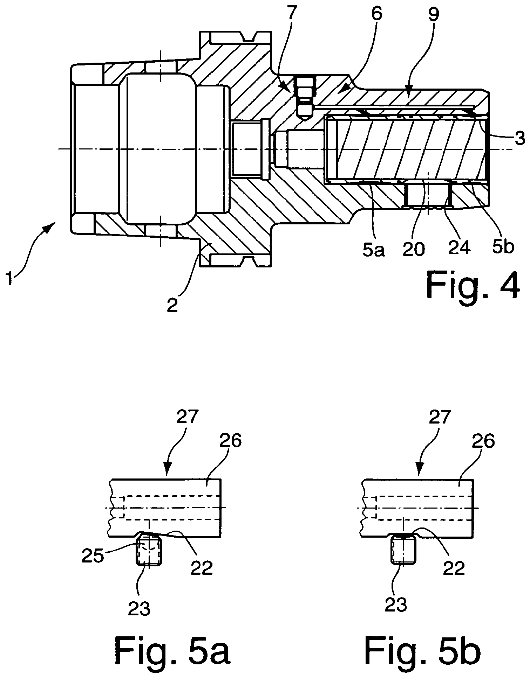

Fig. 1 bis 4 veranschaulichen den Aufbau eines erfindungsgemäßen Hydrodehnspannfutters 1. Das Hydrodehnspannfutter 1 weist einen Grundkörper 2 und eine Dehnbuchse 3 auf. Der Grundkörper 2 weist an seinem in Fig. 2, 3 und 4 linken Ende einen an sich bekannten Befestigungskonus, hier in Form eines Hohlschaftkegels, zur Befestigung des Hydrodehnspannfutters 1 an einer (nicht gezeigten) Werkzeugmaschinenspindel auf. An seinem in Fig. 2, 3 und 4 rechten Ende weist der Grundkörper 2 eine zentrale Zylinderbohrung 4 zur Aufnahme der Dehnbuchse 3 auf. Fig. 4 zeigt das Hydrodehnspannfutter 1 mit in die Zylinderbohrung 4 eingepresster Dehnbuchse 3 zur Aufnahme eines (nicht gezeigten) Werkzeugs. Die Dehnbuchse 3 bildet außenumfangsseitig im Zusammenwirken mit der zylindrischen Innenoberfläche der im Grundkörper 2 ausgebildeten Zylinderbohrung 4 zwei in einem axialen Abstand zueinander angeordnete Druckkammern 5a 5b aus, die über ein hydraulisches Spannsystem 6 mit einem hydraulischen Druck beaufschlagbar sind.

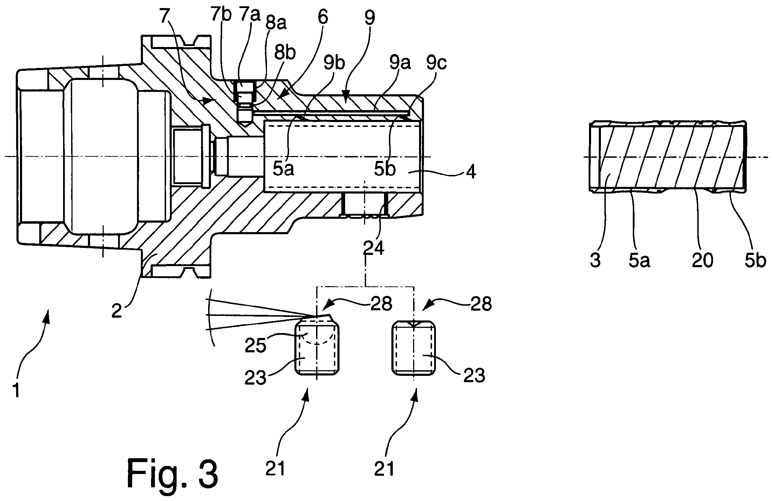

Zur Ausbildung der beiden Druckkammern 5a, 5b hat die Dehnbuchse 3, wie es aus Fig. 3, 4 und 6a bis 6c ersichtlich ist, eine mit Ringnuten 16 versehene Außenumfangsfläche.

Das hydraulische Spannsystem 6 weist einen Spannsatz 7 sowie ein Druckeinspeisungskanalsystem 9 auf. Der Spannsatz 7 ist aus einer Spannschraube 7a und einem von der Spannschraube 7a angetriebenen Spannkolben 7b gebildet. Die Spannschraube 7a ist in einer im Grundkörper 2 ausgebildeten radialen Gewindebohrung 8a eingeschraubt, während der Spannkolben 7b in einer im Grundkörper 2 in Flucht mit der Gewindebohrung 8a ausgebildeten Bohrung 8b geführt ist. Das Druckeinspeisungskanalsystem 9 verbindet den vom Spannkolben 7b mit Druck beaufschlagten Abschnitt der Bohrung 8b mit den beiden zwischen der Dehnbuchse 3 und dem Grundkörper 2 definierten Druckkammern 5a, 5b. Zu diesem Zweck weist das Druckeinspeisungskanalsystem 9 einen im Grundkörper 2 außerhalb der Zylinderbohrung 4 ausgebildeten axialen Hauptkanal 9a auf, der über Zweigkanäle 9b, 9c mit den beiden Druckkammern 5a, 5b verbunden ist. Durch Betätigung des Spannsatzes 7 kann daher das in der Bohrung 8b befindliche Druckfluid mit Druck beaufschlagt werden, der über das Druckeinspeisungskanalsystem 9 schließlich auf die beiden Druckkammern 5a, 5b übertragen wird. Der in den beiden Druckkammern 5a, 5b erzeugte Druck bewirkt eine entsprechende Verformung der Dehnbuchse 3 radial nach innen, wodurch der in der Dehnbuchse 3 aufgenommene Werkzeugschaft 26 eines nur in diesem Umfang gezeigten Werkzeugs 22 kraftschlüssig gespannt wird.

Um eine verdrehsichere Mitnahme des Werkzeugs auch bei nicht mehr ausreichender kraftschlüssiger Spannung der Dehnbuchse 3 zu gewährleisten, hat das erfindungsgemäße Hydrodehnspannfutter zusätzlich ein rein mechanisch funktionierendes Drehmomentmitnahmesystem, über das ein in der Dehnbuchse bereits kraftschlüssig eingespanntes Werkzeug axial sowie in Drehrichtung arretiert werden kann.

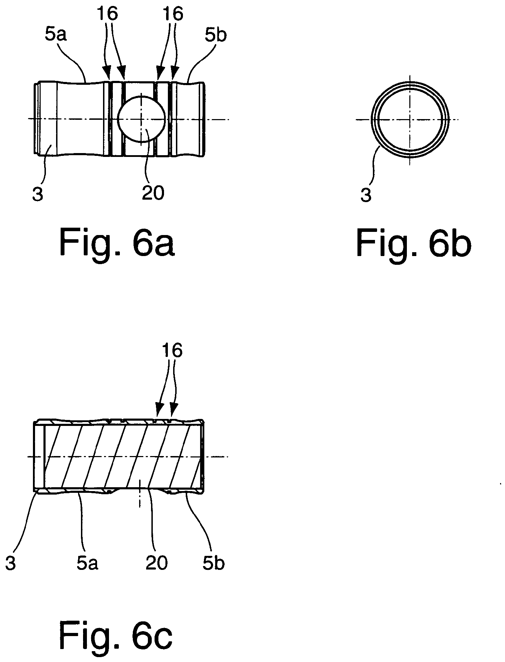

Die Dehnbuchse 3 weist hierzu, wie es aus Fig. 6a und 6c ersichtlich ist, im Bereich des axialen Abstands zwischen den beiden Druckkammern *5a*, 5b einen radialen Durchbruch 20 auf. Der Durchbruch 20 ist in Flucht mit einem im Grundkörper 2 verstellbar gehaltenen Mitnehmer 21 angeordnet, der über den Durchbruch 20 in formschlüssigem Eingriff mit einer Mitnahmefläche 22 (vgl. Fig. 5a oder 5b*)* am Werkzeugschaft eines in der Dehnbuchse *3* aufgenommenen Werkzeugs bringbar ist. Die Verlegung des radialen Durchbruchs 20 in den Bereich des axialen Abstands zwischen den beiden Druckkammern 5a, 5b ermöglicht eine problemlos zu beherrschende Abdichtung der beiden Druckkammern 5a, 5b gegenüber dem radialen Durchbruch 20.

Das erfindungsgemäße Hydrodehnspannfutter 1 zeichnet sich durch einen Mitnehmer 21 mit einer von radial außerhalb des Hydrodehnspannfutters 1 antreibbaren Mitnehmerschraube 23 aus, die in einer im Grundkörper 2 in Flucht mit dem radialen Durchbruch 20 in der Dehnbuchse 3 ausgebildeten Gewindebohrung 24 eingeschraubt ist. In dem in den Figuren gezeigten Beispiel ist der Mitnehmer 21 radial, d.h. rechtwinklig zur Längsmittelachse des Hydrodehnspannfutters 1 bzw. Werkzeugs, ausgerichtet. Alternativ dazu kann der Mitnehmer 21 aber auch unter einem vorgegebenen Winkel kleiner 90° zur Längsmittelachse ausgerichtet sein.

Wie es aus Fig. 3 und 4 ersichtlich ist, ist der Mitnehmer 21 funktional unabhängig sowie räumlich getrennt von dem im Grundkörper 2 vorgesehenen Spannsatz 7 zur hydraulischen Druckbeaufschlagung der beiden Druckkammern 5a, 5b angeordnet. Erfindungsgemäß kann die Mitnehmerschraube 23 nun jederzeit und ohne Rücksicht auf den Betätigungszustand des Spannsatzes 7 bzw. den Spannzustand der Dehnbuchse 3 von radial außerhalb des Hydrodehnspannfutters 1 angetrieben werden. Über den formschlüssigen Eingriff des Mitnehmers 21 mit der Mitnahmefläche 22 (vgl. Fig. 5a oder 5b*)* am Werkzeugschaft eines in der Dehnbuchse 3 aufgenommenen Werkzeugs kann das Werkzeug axial und zur Drehmomentübertragung im Grundkörper 2 arretiert werden. Durch eine entsprechend enge Tolerierung des radialen Durchbruchs 20 der Dehnbuchse 3 lässt sich über den Mitnehmer 21 zugleich die Dehnbuchse 3 sowohl axial als auch in Drehrichtung um die Längsmittelachse des Hydrodehnspannfutters 1 arretieren.

Wie es in Fig. 3 und 4 veranschaulicht ist, kann, was die Gestaltung des Mitnehmers 21 und der Mitnahmefläche 22 betrifft, weitgehend auf z.T. bekannte oder genormte Gestaltungen zurückgegriffen werden. Die Mitnahmefläche 22 am Werkzeugschaft 26 eines nur in diesem Umfang dargestellten Werkzeugs 27 kann beispielsweise als eine achsparallele Fläche gemäß DIN 1835 B oder als eine unter einem vorgegebenen Winkel zur Längsmittelachse des Werkzeugs geneigte Fläche gemäß DIN 1835 E ausgebildet sein. Abhängig von der Ausrichtung der Achse der Mitnehmerschraube 23 und der Ausrichtung der Mitnahmefläche 22 am Werkzeugschaft kann die Mitnehmerschraube 23 unmittelbar oder mittelbar auf die Mitnahmefläche 22 wirken. In dem in Fig. 5b gezeigten Beispiel weist die Mitnehmerschraube 23 eine stirnseitige Druckfläche auf, die für eine unmittelbare flächige Anlage an der Mitnahmefläche 22 am Werkzeugschaft 26 ausgebildet ist. In diesem Fall reduziert sich der Mitnehmer 21 auf die Mitnehmerschraube 23, die in formschlüssigem Eingriff mit der Mitnahmefläche 22 am Werkzeugschaft 26 angebracht werden kann. Alternativ dazu kann, wie es in Fig. 5b gezeigt ist, die Mitnehmerschraube 23 stirnseitig über ein Kugelgelenk mit einem Druckübertragungsstück 24 verbunden sein, das eine Druckfläche 28 aufweist, die für eine flächige Anlage an der Mitnahmefläche 22 am Werkzeugschaft ausgebildet ist. Diese Gestaltung ermöglicht eine Verdrehung des Druckübertragungsstücks 25 relativ zur Mitnehmerschraube 23 und damit eine Ausrichtung der am Druckübertragungsstück 25 ausgebildeten Druckfläche nach der am Werkzeugschaft ausgebildeten Mitnahmefläche 22. In diesem Fall wirkt die Mitnehmerschraube 23 daher über das stirnseitig angeordnete Druckübertragungsstück 24 mittelbar auf die Mitnahmefläche 22 am Werkzeugschaft. Der Mitnehmer 21 ist daher aus der Mitnehmerschraube 23 und dem Druckübertragungsstück 24 gebildet.

Durch die beiden zuvor beschriebenen Ausführungsformen des Mitnehmers 21 wird eine radiale Spannung des Werkzeugschaftes 26 mit einer gleichzeitig axialen Sicherung ermöglicht, da nach dem Überführen des Mitnehmers 21 in seine Spannposition dessen Druckfläche 28 an der Mitnahmefläche 22 unter Druck anliegt und somit ein axiales Lösen verhindert.

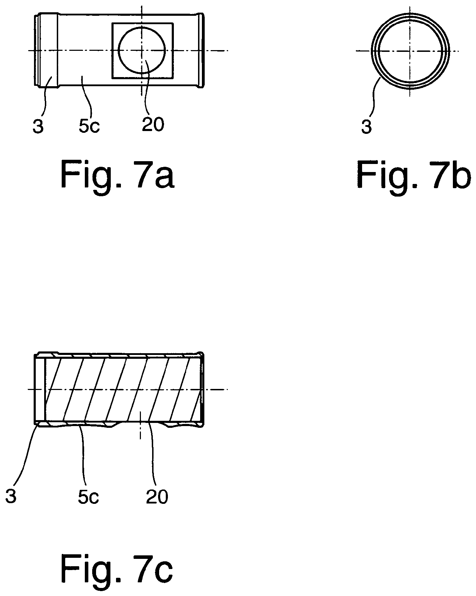

Fig. 7a bis 7c zeigen eine abgewandelte Gestaltung der Dehnbuchse 3 gegenüber der in Fig. 6a bis 6c gezeigten Gestaltung. In dieser Abwandlung definiert die Dehnbuchse 3 mit dem Grundkörper 2 eine ringförmige Druckkammer 5c, die mit Ausnahme eines inselförmigen Bereichs 5d durchgängig ist. Der radiale Durchbruch 20 liegt hier innerhalb des inselförmigen Bereich 5d.

## Patentansprüche

1. Hydrodehnspannfutter (1) mit einem Werkzeug (27), wobei das Werkzeug (27) an einem Werkezugschaft (26) eine Mitnahmefläche (22) aufweist, und wobei das Hydrodehnspannfutter (1) einen Grundkörper (2) und eine unter Ausbildung wenigstens einer Druckkammer *(*5a, 5b, 5c*)* im Grundkörper (2) eingesetzten Dehnbuchse (3) zum Einspannen eines Werkzeugs umfasst, wobei die Dehnbuchse (3) einen radialen Durchbruch (20) aufweist, der in Flucht mit einem im Grundkörper (2) verstellbar gehaltenen Mitnehmer (21) angeordnet ist, der über den Durchbruch (20) am Werkzeugschaft (26) eines in der Dehnbuchse (3) aufzunehmenden Werkzeugs (27) angreift, **dadurch gekennzeichnet, dass** der Mitnehmer (21) eine von radial außerhalb des Hydrodehnspannfutters (1) antreibbare Mitnehmerschraube (23) aufweist, die in einer im Grundkörper (2) in Flucht mit dem radialen Durchbruch (20) ausgebildeten Gewindebohrung (24) eingeschraubt ist und in formschlüssigem Eingriff mit der Mitnahmefläche (22) bringbar ist und mit dessen Druckfläche (28) an der Mitnehmerfläche (22) des Werkzeugschafts (26) nach dem Überführen in seine Spannposition unter Druck anliegt.

2. Hydrodehnspannfutter (1) nach Anspruch 1, **dadurch gekennzeichnet, dass** die Mitnehmerschraube (21) eine fest daran angeordnete stirnseitige Druckfläche (28) aufweist, die auf die Mitnahmefläche (22) am Werkzeugschaft (26) eines in der Dehnbuchse (3) aufzunehmenden Werkzeugs (27) wirkt.

3. Hydrodehnspannfutter (1) nach Anspruch 1, **dadurch gekennzeichnet, dass** die Mitnehmerschraube (23) über ein stirnseitig angeordnetes Druckübertragungsstück (25) mit einer daran ausgebildeten Druckfläche (28) auf die Mitnahmefläche (22) am Werkzeugschaft (26) eines in der Dehnbuchse (3) aufzunehmenden Werkzeugs (27) wirkt.

4. Hydrodehnspannfutter (1) nach Anspruch 3, **dadurch gekennzeichnet, dass** das Druckübertragungsstück (25) in der Art eines Kugelgelenks mit der Mitnehmerschraube (21) zur schwenkbaren Ausrichtung der Druckfläche (28) verbunden ist.

5. Hydrodehnspannfutter (1) nach Anspruch 3, **dadurch gekennzeichnet, dass** das Druckübertragungsstück (25) als Kugel mit der Druckfläche (28) ausgebildet ist, die drucksteif und zur Ausrichtung der Druckfläche (28) verdrehbar in der Mitnehmerschraube (23) aufgenommen ist.

6. Hydrodehnspannfutter (1) nach einem der Ansprüche 1 bis 5, **dadurch gekennzeichnet, dass** die Dehnbuchse (3) mit dem Grundkörper (2) wenigstens zwei axial beabstandete ringförmige Druckkammern (5a, 5b) definiert und der radiale Durchbruch (20) im Bereich des axialen Abstands zwischen den beiden Druckkammern (5a, 5b) liegt.

7. Hydrodehnspannfutter (1) nach einem der Ansprüche 1 bis 5, **dadurch gekennzeichnet, dass** die Dehnbuchse (3) mit dem Grundkörper (2) eine ringförmige Druckkammer (5c) definiert, die mit Ausnahme eines inselförmigen Bereichs (5d) durchgängig ist, wobei der radiale Durchbruch (20) innerhalb des inselförmigen Bereichs (5d) liegt.

8. Hydrodehnspannfutter (1) nach einem der vorhergehenden Ansprüche, **dadurch gekennzeichnet, dass** zur Ausbildung der wenigstens einen Druckkammer (5a, 5b, 5c) die Dehnbuchse (3) eine mit wenigstens einer Ringnut (16) versehene Außenumfangsfläche und der Grundkörper (2) eine zylindrische Innenumfangsfläche aufweist.

9. Hydrodehnspannfutter (1) nach Anspruch 8, **dadurch gekennzeichnet, dass** die wenigstens eine Druckkammer (5a, 5b, 5c) mit einem im Grundkörper (2) ausgebildeten Druckeinspeisungskanalsystem (9) verbunden ist.

## Claims

1. Hydraulic expansion chuck (1) with a tool (27), wherein the tool (27) comprises a tool shaft (26) having a driving surface (22) and wherein the hydraulic expansion chuck (1) is having a main body (2) and an expanding bush (3) inserted in the main body (2) to form at least one pressure chamber (5a, 5b, 5c) for chucking a tool, wherein the expanding bush (3) has a radial opening (20) arranged in alignment with a driver (21) held moveably in the main body (2), which driver (21) engages via the opening (20) in the expanding bush (3) on the tool shaft (26) of a tool (27) which is to be received in the expanding bush (3), **characterised in that** the driver (21) has a driver screw (23) that is activatable radially outside the hydraulic expansion chuck (1), which is screwed into the threaded bore (24) formed in the main body (2) in alignment with the radial opening (20) and is arrangeable positivlocking with the driving surface (22) and after being placed in a clamping position its pressure surface (28) is subject to pressure on the driving surface (22) of the tool shaft (26).

2. Hydraulic expansion chuck (1) according to claim 1, **characterised in that** the driver screw (21) has a frontal pressure surface (28) arranged tightly thereon, which acts on the driving surface (22) on the tool shaft (26) of a tool (27) which is to be received in the expanding bush (3).

3. Hydraulic expansion chuck (1) according to claim 1, **characterised in that** the driver screw (23) acts on the driving surface (22) on the tool shaft (26) of a tool (27) which is to be received in the expanding bush (3) via a frontally arranged pressure transfer unit (25) with a pressure surface (28) formed thereon.

4. Hydraulic expansion chuck (1) according to claim 3, **characterised in that** the pressure transfer unit (25) is connected to the driver screw (21) for the rotatable alignment of the pressure surface (28) in the form of a ball-and-socket joint.

5. Hydraulic expansion chuck (1) according to claim 3, **characterised in that** the pressure transfer unit (25) is designed as a sphere with the pressure surface (28), which is received in rigid compression and for aligning the pressure surface (28) rotatably in the driver screw (23).

6. Hydraulic expansion chuck (1) according to one of claims 1 to 5, **characterised in that** the expanding bush (3) defines, with the main body (2), at least 2 axially-spaced annular pressure chambers (5a, 5b), and **in that** the radial opening (20) lies in the region of the axial distance between both pressure chambers (5a, 5b).

7. Hydraulic expansion chuck (1) according to one of claims 1 to 5, **characterised in that** the expanding bush (3), with the main body (2), defines an annular pressure chamber (5c), which, with the exception of an island-like region (5d), is continuous, wherein the radial opening (20) lies within the island-like region (5d).

8. Hydraulic expansion chuck (1) according to one of the preceding claims, **characterised in that**, for the formation of the at least one pressure chamber (5a, 5b, 5c), the expanding bush (3) has an external peripheral surface possessing at least one annular groove (16) and the main body (2) has a cylindrical internal peripheral surface.

9. Hydraulic expansion chuck (1) according to claim 8, **characterised in that** the at least one pressure chamber (5a, 5b, 5c) is connected to a pressure feed channel system (9) formed in the main body (2).

## Revendications

1. Mandrin hydro-expansible (1) équipé d'un outil (27), l'outil (27) présentant, sur une queue d'outil (26), une surface d'entraînement (22) et le mandrin hydro-expansible (1) comprenant un corps de base (2) et une douille expansible (3) qui est destinée à fixer un outil par serrage et qui forme, logée dans ledit corps de base (2), au moins une chambre de pression (5a, 5b, 5c), la douille expansible (3) présentant une ouverture radiale (20) disposée de manière à être en alignement avec un entraîneur (21) qui est maintenu de manière réglable dans le corps de base (2) et qui appuie, par l'ouverture (20), contre la queue d'outil (26) d'un outil (27) devant être inséré dans la douille expansible (3), **caractérisé en ce que** l'entraîneur (21) présente une vis d'entraînement (23) pouvant être actionnée depuis un endroit situé radialement à l'extérieur du mandrin hydro-expansible (1) laquelle est vissée dans un trou fileté (24) formé dans le corps de base (2) de manière à être en alignement avec l'ouverture radiale (20) et laquelle peut être mise en prise par conjugaison de forme avec la surface d'entraînement (22), ledit entraîneur, une fois passé dans sa position de serrage, appuyant, grâce à la pression à laquelle il est soumis, avec sa surface de pression (28) contre la surface d'entraînement (22) de la queue d'outil (26).

2. Mandrin hydro-expansible (1) selon la revendication 1, **caractérisé en ce que** la vis d'entraînement (21) présente une surface de pression frontale (28) qui est disposée de manière fixe sur celle-ci et agit sur la surface d'entraînement (22) formée sur la queue d'outil (26) d'un outil (27) devant être inséré dans la douille expansible (3).

3. Mandrin hydro-expansible (1) selon la revendication 1, **caractérisé en ce que** la vis d'entraînement (23) agit par l'intermédiaire d'un élément de transmission de pression (25), disposé du côté frontal et pourvu d'une surface de pression (28) formée sur ce dernier, sur la surface d'entraînement (22) prévue sur la queue d'outil (26) d'un outil (27) devant être inséré dans la douille expansible (3).

4. Mandrin hydro-expansible (1) selon la revendication 3, **caractérisé en ce que** l'élément de transmission de pression (25) est relié à la vis d'entraînement (21) par une articulation du type articulation à rotule en vue d'orienter par pivotement la surface de pression (28).

5. Mandrin hydro-expansible (1) selon la revendication 3, **caractérisé en ce que** l'élément de transmission de pression (25) est réalisé sous la forme d'une rotule pourvue de la surface de pression (28), laquelle est logée dans la vis d'entraînement (23) de manière à être rigide à la pression et à pouvoir tourner dans celle-ci en vue d'orienter la surface de pression (28).

6. Mandrin hydro-expansible (1) selon l'une quelconque des revendications 1 à 5, **caractérisé en ce que** la douille expansible (3) définit, avec le corps de base (2), au moins deux chambres de pression annulaires (5a, 5b) espacées axialement l'une de l'autre et **en ce que** l'ouverture radiale (20) se situe dans la zone formée par l'espacement axial entre les deux chambres de pression (5a, 5b).

7. Mandrin hydro-expansible (1) selon l'une quelconque des revendications 1 à 5, **caractérisé en ce que** la douille expansible (3) définit, avec le corps de base (2), une seule chambre de pression annulaire (5c) qui s'étend de manière continue à l'exception d'une zone (5d) en forme d'îlot, l'ouverture radiale (20) étant située à l'intérieur de la zone (5d) en forme d'îlot.

8. Mandrin hydro-expansible (1) selon l'une quelconque des revendications précédentes, **caractérisé en ce que**, pour former ladite au moins une chambre de pression (5a, 5b, 5c), la douille expansible (3) présente une surface circonférentielle extérieure pourvue d'au moins une rainure annulaire (16) et que le corps de base (2) présente une surface circonférentielle intérieure cylindrique.

9. Mandrin hydro-expansible (1) selon la revendication 8, **caractérisé en ce que** ladite au moins une chambre de pression (5a, 5b, 5c) est reliée à un système de canal d'alimentation en pression (9) formé dans le corps de base (2).
